# EUROPÄISCHE PATENTANMELDUNG

(11) **EP 1 184 638 A2**
(43) Veröffentlichungstag der Anmeldung: **06.03.2002**
(21) Anmeldenummer: 01120479.9
(22) Anmeldetag: 28.08.2001
(51) Int. Cl.: F28F 1/20

(54) **Wärmeleitprofil**

(30) Priorität: 01.09.2000 DE 10042996
(71) Anmelder: ABB PATENT GmbH, 68526 Ladenburg (DE)
(72) Erfinder: Ferl, Klaus, Dipl.-Ing., 72160 Horb (DE)
(74) Vertreter: Miller, Toivo

(57) **Zusammenfassung**

Die Erfindung betrifft ein Wärmeleitprofil (10, 12, 14, 15, 16), das insbesondere vorgesehen zu Einbau in Wärmetauscherdecken vorgesehen ist, mit einem bandartigen Basiselement (20), mit in dessen Längsrichtung symmetrisch verlaufenden, auf der Oberseite angeformten, nach oben weisenden Verbindungsstegen (24, 26,38, 40) und mit einer mittig dazwischen am Basiselement (20) angeformten Einrichtung (22) zur formschlüssigen Aufnahme eines Wärmetauscherrohrs (57). An der hiervon abgewandten Unterseite des Basiselements (20) ist wenigstens eine Ausnehmung (27, 29) eingeformt, die als Kammer (28, 30) zur Aufnahme von streifenförmigen Magneten vorgesehen ist. An das Basiselement (20), beiderseits der nach oben weisenden Verbindungsstege (24, 26,38, 40), entlang der Längskanten des Basiselements (20) sind Seitenstege (32, 34) angeformt, deren Breite jeweils wenigstens 10%, vorzugsweise 20%, der Breite des Basiselements (20) beträgt. Des weiteren betrifft die Erfindung eine Wärmetauscherdecke, bei der bevorzugt die erfindungsgemäßen Wärmetauscher verwendet werden.

## Beschreibung

Die Erfindung betrifft ein Wärmeleitprofil, insbesondere vorgesehen zum Einbau in Wärmetauscherdecken, mit einem bandartigen Basiselement, mit nach oben weisenden Verbindungsstegen und mit einer mittig dazwischen am Basiselement angeformten Einrichtung zur formschlüssigen Aufnahme eines Wärmetauscherrohrs, wobei an der hiervon abgewandten Unterseite des Basiselements wenigstens eine Ausnehmung eingeformt ist, die als Kammer zur Aufnahme von streifenförmigen Magneten vorgesehen sind.

Aus der G 94 17 231 U1 ist ein Wärmeleitprofil bekannt, in dem ein Wärmetauscherrohr geführt ist. Die Wärmeleitprofile sind mittels Magnetkraft mit den betreffenden Deckenverkleidungsplatten verbunden und vorzugsweise parallel zur längeren Seite der Deckenverkleidungsplatten nebeneinander auf dieser angeordnet. Um die einzelnen Wärmetauscherrohre auf einer Deckenverkleidungsplatte miteinander zu verbinden sind an den jeweiligen Ende eines Wärmeleitprofils Rohrverbindungsbögen angesetzt, die demgemäß jeweils über die Stirnseiten der Wärmeleitprofile überstehen. Die Rohrverbindungsbögen dürfen jedoch nicht über die Kontur der betreffenden Deckenverkleidungsplatte überstehen, da diese sonst nicht mehr in die Tragekonstruktion der Decke einhängbar ist. Derart verbunden, ist ein mäanderförmiges Wärmetauscherrohr für eine Deckenverkleidungsplatte geformt.

Ausgehend von diesem Stand der Technik ist es Aufgabe der Erfindung ein Wärmeleitprofil sowie eine Wärmetauscherdecke anzugeben, die wärmetechnisch verbesserte Eigenschaften aufweisen sowie zur Versteifung der Deckenverkleidungsplatten beitragen.

Diese Aufgabe wird erfindungsgemäß durch ein Wärmeleitprofil, insbesondere für Wärmetauscherdecken, mit den in Anspruch 1 genannten Merkmalen, sowie mit einer Wärmetauscherdecke mit den in Anspruch 12 genannten Merkmalen gelöst.

Bei einem erfindungsgemäßen Wärmeleitprofil sind an das Basiselement beiderseits der nach oben weisenden Verbindungsstege, entlang der Längskanten des Basiselements Seitenstege angeformt, deren Breite jeweils wenigstens 10%, vorzugsweise 20%, der Breite des Basiselements beträgt.
Die Fläche des Basiselements ist eine wesentliche Größe bei der Wärmeübertragung von einer Deckenverkleidungsplatte auf ein Wärmetauscherrohr beziehungsweise für die umgekehrte Wärmeflußrichtung. Das Basiselement ist quasi durch die Seitenstege längsseitig verbreitert. So ist die aktive, das heißt die an der Wärmeübertragung beteiligte Fläche vorteilhaft vergrößert, bezogen auf die Gesamtfläche, die ein Wärmeleitprofil auf der Deckenverkleidungsplatte überdeckt. Die aktive Fläche ist im wesentlichen die Fläche des Basiselements abzüglich der Fläche der Öffnungen in den Kammern in denen die Magnete eingelegt sind, sowie zuzüglich der Flächen der Seitenstege. Einerseits kann so die übertragbare Wärmemenge bei vergleichbarer Wärmeleitprofillänge vergrößert werden oder andererseits bei vergleichbarer zu übertragender Wärmemenge die Gesamtlänge der Wärmeleitprofile einer Deckenverkleidungsplatte reduziert werden. Beide Anwendungen sind jedenfalls, abhängig vom Optimierungsziel, nützlich.

Eine vorteilhaft verkürzte Montagezeit wird erreicht, wenn das Wärmetauscherrohr kraftschlüssig in das ihr zugeordnete Halteelement einklipsbar ist. Darüber hinaus können die Wärmetauscherrohre für eine Deckenverkleidungsplatte günstigerweise bereits vor der Montage in die Wärmeleitprofile mit Verbindungsleitungen untereinander verbunden und beispielsweise auf Dichtigkeit geprüft werden.

Ein vorteilhaft hoher Wärmefluß zwischen dem Basiselement und der Einrichtung zur formschlüssigen Aufnahme ist erreicht, wenn die Verbindungsstelle zwischen diesen Teilen wenigstens eine Breite entsprechend fünfzig Prozent der Breite der Einrichtung, insbesondere bezogen auf dessen lichte Weite, hat, in Querschnittsansicht gesehen. Ein erhöhter Wärmefluß ermöglicht vorteilhafterweise die Übertragung größerer Wärmemengen über die aktive Fläche des Basiselements.

Es ist von Vorteil bei dem Verbindungssteg eine querschnittsverkleinerte Stelle anzuordnen, insbesondere im Bereich des Basiselements beziehungsweise der Ausnehmung zum Einlegen des Magnetstreifens. Mit dieser Maßnahme wird der Wärmefluß in das freie Ende des Verbindungsstegs vorteilhaft reduziert. Des weiteren wird das Verbindungssteg genau in der Richtung flexibler, in der diese Nachgiebigkeit zum einrasten in eine Tragkonstruktion der Deckenverkleidungsplatte von Vorteil ist.

Eine besonders günstige Ausgestaltung des Wärmeleitprofils ist es, an der zu dem Halteelement weisenden Seite der Verbindungsstege je wenigstens ein stegartiges Versteifungselement anzuordnen. Die Verbindungsstege mit den Versteifungselementen und das Basiselement formen in der Ansicht auf die Querschnittsebene gesehen ein auf einer Seite teilweise geöffnetes viereckiges Profil, welches dann, räumlich gesehen, kastenartig ausgebildet ist und besonders die Steifigkeit des Wärmeleitprofils begünstigt. Dies betrifft vorteilhafterweise die Biegesteifigkeit, als auch die Verwindungssteifigkeit, das heißt die Torsionssteifigkeit. Im montierten Zustand ist das Wärmeleitprofil einer Deckenverkleidungsplatte zugeordnet und magnetisch mit dieser verbunden. Mit der erhöhten Steifigkeit ist Durchbiegung in Längs- beziehungsweise Querrichtung, auch Durchhang genannt, der Deckenverkleidungsplatte erheblich reduziert. Dies ermöglicht es, beispielsweise die einzelnen Deckenverkleidungsplatten zu vergrößern ohne einen größeren Durchhang zu haben. Die Anzahl der Deckenverkleidungsplatten einer zu bildenden Deckenfläche ist vorteilhaft reduziert und die Montage vereinfacht.

Andererseits ist bei vergleichbarer Größe der Deckenverkleidungsplatten ein verminderter Durchhang erreicht. Hier ist der optische Eindruck der Deckenverkleidungsplatte beziehungsweise der Decke insgesamt verbessert.

Ein Wärmeleitprofil, das in einem Verbindungssteg wenigstens eine erste Ausnehmung aufweist, durch die wenigstens eine Verbindungsleitung dem Wärmetauscherrohr in einer Einrichtung zur formschlüssigen Aufnahme desselben, im folgenden auch Halteelement genannt, längsseitig sowie parallel zur durch das Basiselement bestimmte Ebene zuführbar ist, besitzt eine besonders günstige Ausgestaltung: die Verbindungsleitung, welche die Wärmetauscherrohre miteinander verbindet, ist damit längsseitig aus dem Bereich des Wärmeleitprofils ausgeführt. Eine sonst übliche stirnseitige ausgeführte Verbindungsleitung, häufig ein halbkreisförmiges Rohrstück, ist vorteilhafterweise vermieden. Demgemäß ist die Länge das Wärmeleitprofil bis zur Länge der Deckenverkleidungsplatten wählbar, was die Wärmetauscherfläche, insbesondere auch die aktive Fläche, des Basiselements entsprechend vergrößert. Zudem wirkt sich die Verlängerung des Wärmeleitprofils vorteilhaft auf die Versteifung der Deckenverkleidungsplatten aus.

Eine erfindungsgemäße Wärmetauscherdecke weist in demjenigen der Verbindungsstege eines Wärmeleitprofils, das zu dem benachbarten Wärmeleitprofil weist, wenigstens an einer geeigneten Stelle eine erste Ausnehmung auf, durch welche die Verbindungsleitung geführt ist. Eine über die Stirnseite des Wärmeleitprofils überstehende Verbindungsleitung ist vorteilhafterweise vermieden. Diese Anordnung der hat den besonderen Vorteil, daß längere Wärmeleitprofile mit vergleichsweise größeren Basiselementen und somit größeren Wärmetauscherflächen auf eine Deckenverkleidungsplatte aufbringbar sind. Zusammen mit einer erfindungsgemäßen Ausgestaltung der Wärmeleitprofile ist der wärmetechnisch inaktive Abstand zwischen den Längsseiten zweier benachbarter Wärmeleitprofile vorteilhaft verringert, weil die erfindungsgemäßen Seitenelemente, welche die längsseitige Begrenzung der Wärmeleitprofile bilden, wärmetechnisch aktiv ausgebildet sind.

Die für eine Deckenverkleidungsplatte als Wärmetauschfläche zur Verfügung stehenden Basiselementflächen sind vorteilhaft maximiert, wenn sich die zueinander weisenden Längsseiten zweier benachbarter Seitenelemente von Wärmeleitprofilen berühren.

Weitere vorteilhafte Ausgestaltungen der Erfindung sind den abhängigen Ansprüchen zu entnehmen.

Die Erfindung, Ausgestaltungen der Erfindung sowie die besonderen Vorteile der Erfindung sollen anhand der folgenden Figuren gezeigt, beschrieben und näher erläutert werden.

Es zeigen:
- Fig. 1: eine Ansicht auf einen Querschnitt eines ersten Wärmeleitprofils,
- Fig. 2: eine Ansicht auf einen Querschnitt eines zweiten Wärmeleitprofils und
- Fig. 3: eine Draufsicht auf eine Anordnung von Wärmeleitprofilen.

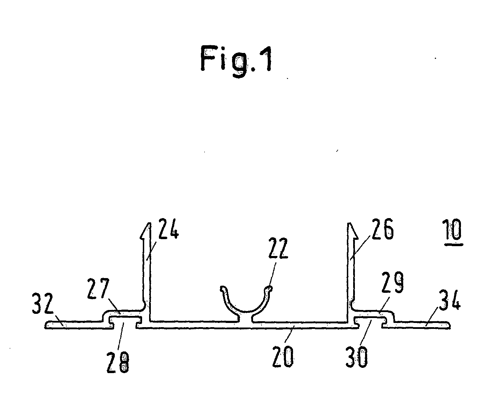

Die Fig. 1 zeigt ein erstes Wärmeleitprofil 10 in einer Ansicht auf dessen typischen Querschnitt, wobei dieser senkrecht auf dessen Längsrichtung steht und im wesentlichen an jeder Stelle der Längsrichtung einen identischen Querschnitt aufweist, jedoch stellenweise verändert ist, mit den nachfolgend näher beschriebenen Ausnehmungen bei bestimmten Anordnungen. Die Herstellung eines solchen Wärmeleitprofils erfolgt üblicherweise mittels eines Strangpressverfahrens. Ein üblicherweise verwendetes Material ist Aluminium beziehungsweise eine Aluminiumlegierung.

Das erste Wärmeleitprofil 10 weist ein plattenartiges Basiselement 20 auf, bei dem in dieser Ansicht mittig ein erstes Halteelement 22 angeordnet ist. In dieser Ansicht ist das erste Halteelement 22 rinnenartig, in Form eines etwas über 180° ausgestalteten Ringabschnitts ausgebildet und mittig an dessen Außenfläche mit dem Basiselement 20 verbunden. Die lichte Weite des ersten Halteelements 22 ist in nützlicher Weise auf den Außendurchmesser eines Wärmetauschrohrs angepaßt, so daß deren Kontaktfläche möglichst groß ist. Des weiteren ist die Ausgestaltung des Ringabschnitts so gewählt, daß des Wärmetauscherrohr leicht in das Halteelement einrastbar ist, zugleich jedoch das Wärmetauscherrohr im eingerasteten Zustand fixiert.

Symmetrisch zum ersten Halteelement 22 und auf dessen Seite, sowie senkrecht zum Basiselement 20 sind ein erstes 24 sowie ein zweiter Verbindungssteg 26 angeordnet, wobei deren freie Enden auf den voneinander abgewendeten Seiten eine Anformung aufweisen, die so gestaltet ist, daß sie in eine, hier nicht dargestellte, Tragekonstruktion einschiebbar ist und dann das Wärmeleitprofil mit der Tragekonstruktion verbindend verrastet. Die Länge der Verbindungsstege 24, 26 ist so gewählt, daß diese eine gewisse federnde Eigenschaft aufweisen und die Verrastung ermöglichen.

Von der Mitte Basiselements 20 ausgehend folgen nach den Verbindungsstegen 24, 26 eine erste Ausnehmung 27 beziehungsweise eine zweite Ausnehmung 29 des Basiselements 22. Diese sind so gestaltet, daß eine erste Kammer 28 beziehungsweise eine zweite Kammer 30 geformt ist, die dafür vorgesehen ist, einen Magnetstreifen formschlüssig aufzunehmen. Die Kammern 28, 30 sind an der den Verbindungsstegen 24, 26 abgewandten Seite des Basiselements 20 offen, so daß ein eingelegter Magnetstreifen an einer an diese Seite angelegte Deckenverkleidungsplatte magnetisch anhaften kann. Diese Seite des Basiselements 20 ist jedoch insgesamt eben. Als äußeres Teilelement des Basiselements 20 ist nach den Ausnehmungen ein plattenartiges erstes 32 beziehungsweise zweites Seitenelement 34 angeformt. Diese Seitenelemente 32, 24 verbreitern das Basiselement 20 in nützlicher Weise. Zum einen wird die wärmetechnisch wirksame, die sogenannte aktive Breite des ersten Wärmeleitprofils 10 erhöht und so auch dessen Kapazität. Weiterhin dient die Erhöhung der Fläche des Basiselements 20 pro Längeneinheit der Versteifung der betreffenden Deckenverkleidungsplatte, verringerte also deren Durchbiegung unter deren Eigengewicht.

Beispielsweise ist ein erstes Wärmeleitprofil 10 mit einer Gesamtbreite von ca.120mm gewählt. Von dieser Gesamtbreite sind ca. 106mm aktiv, das heißt es sind ca. 88% der Gesamtbreite an dem Wärmetauschvorgang beteiligt, wobei die aktive Breite der Gesamtbreite ohne die Öffnungen in den Kammern28, 30 für die Magnetstreifen entspricht. Dies ist eine deutliche Verbesserung der aktiven Gesamtbreite, die bisher typischerweise bei ca. 73% (75mm Breite, davon 55mm aktiv) lag.

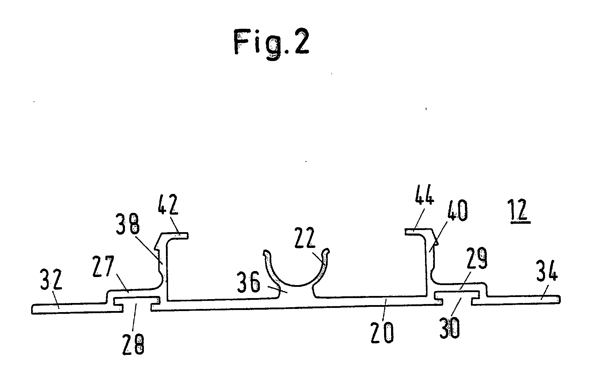

Die Fig. 2 zeigt ein zweites Wärmeleitprofil 12 in einer Ansicht auf dessen typischen Querschnitt. Die im Vergleich zur Fig. 1 gleichartigen Elemente sind in dieser Figur mit den entsprechenden gleichlautenden Bezugszeichen aus der Fig. 1 versehen. Ein wesentlicher Unterschied des zweiten Wärmeleitprofils 12 zu dem der Fig.1 ist der ausgeprägt breite Bereich der Verbindungsstelle 36 zwischen dem Halteelement 22 und dem Basiselement 20. Die Breite beträgt hier ca. 60% des lichten Durchmessers des Halteelements 22. Durch die derart gestaltete Verbindungsstelle 36 ist ein besonders guter Wärmefluß zwischen einem in das Halteelement eingerastetes Wärmetauscherrohr, was nicht dargestellt ist, sowie dem Basiselement, das im wesentlichen den weiteren Wärmefluß beziehungsweise die weitere Wärmeverteilung übernimmt.

Des weiteren sind am zweiten Wärmeleitprofil 12 ein erstes 38 sowie ein zweiter versteifender Verbindungssteg 40 vorhanden. Diese versteifenden Verbindungsstege 38, 40 sind vergleichbar zu den Verbindungsstegen 24, 26 der Fig. 1 am Basiselement 20 angeordnet und besitzen demgemäß auch vergleichbare Anformungen zur Verrastung mit einer entsprechenden Tragekonstruktion. Darüber hinaus weisen diese zusätzliche stegartige Versteifungselemente 42, 44 auf, die in dieser Ausgestaltung des zweiten Wärmeleitprofils 12 an der zum Basiselement 20 weitest entfernt liegenden Stellen der versteifenden Verbindungsstege 38, 40 angeordnet sind. Das Basiselement 20, die versteifenden Verbindungsstege 38, 40 sowie den stegartigen Versteifungselementen 42, 44 haben zusammen gesehen eine Form, die das zweite Wärmeleitprofil erheblich versteift, sowohl in den Biegerichtungen, als auch in den Torsionsrichtungen.

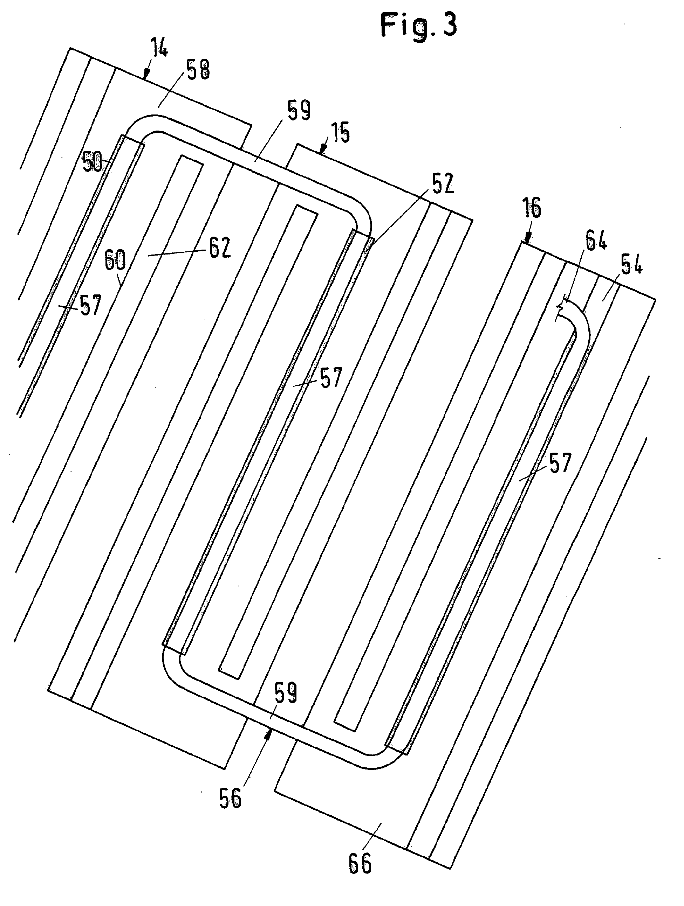

Die Fig. 3 zeigt eine Draufsicht auf eine Anordnung von einem vierten 14, einem fünften 15 sowie einem sechsten Wärmeleitprofil 16, die mit ihren Längsseiten parallel zueinander liegen, und wie diese beispielsweise zur Kühlung einer Deckenverkleidungsplatte einer Kühldecke eingesetzt werden können. Eine mäanderförmige Wärmeträgerleitung 56 weist Wärmetauscherrohre 57 und Verbindungsrohre 59 auf, wobei die Wärmetauscherrohre 57 in den vierten, fünften und sechsten Halteelementen 50, 52, 54 der entsprechenden Wärmeleitprofile 14, 15, 16 gehalten sind, wobei die Wärmetauscherrohre 57 jeweils mit einem 90° Bogen der Verbindungsrohre 59 verbunden sind, und wobei jeweils zwei sich gegenüberliegende 90° Bögen von zwei benachbarten Wärmeprofilen, nämlich dem vierten 14 und dem fünften 15 sowie dem fünften 15 und dem sechsten 16, mit einem wiederum geraden Rohrstück der Verbindungsrohre 59 verbunden sind. Die 90° Bögen sind so gewählt und angeordnet, daß ein Überstehen über die Stirnseiten, das heißt der schmalen Seiten der Wärmeleitprofile 14, 15, 16, vermieden ist.

Die vorgeschlagene Anordnung ist realisierbar, wenn, wie am Beispiel des vierten Wärmeleitprofils 14 gezeigt werden soll, bestimmte Merkmale am betreffenden Wärmeleitprofil verwirklicht sind. Die Wärmeträgerleitung 56 ist im betreffenden Bereich in einem 90° Bogen in Richtung des benachbarten fünften Wärmeleitprofils 15 geführt. Das vierte Halteelement 50 endet mit einem entsprechenden Abstand zu der Stirnseite des Wärmeleitprofils 14, so daß der 90° Bogen vollständig im von einem vierten Basiselement 58 überdeckten Bereich des vierten Wärmeleitprofils 14 liegt. Die Wärmeträgerleitung 56 ist nun parallel zum vierten Basiselement 58 geführt. Zur Vermeidung einer Kollision des Verbindungsrohrs 59 mit einem vierten Verbindungssteg 60 beziehungsweise mit einem vierten Ausnehmung 62, enden diese mit einem entsprechenden Abstand zu der Stirnseite des Wärmeleitprofils 14. Dabei ist es für die Erfindung von untergeordneter Bedeutung, ob das betreffende Wärmeleitprofil mit dem verkürzten Halteelement 50, dem verkürzten Verbindungssteg 60 sowie der verkürzten Ausnehmung 62 so hergestellt wird oder zunächst ungekürzt hergestellt wird und dann durch entsprechende Bearbeitung mit den benötigten Ausnehmungen versehen wird. Das fünfte 15 sowie das sechste Wärmeleitprofil 16 sind entsprechend dem Mäander der Wärmeträgerleitung 56 in ähnlicher Weise gestaltet. Beim sechsten Wärmeleitprofil 16 ist am Ende der Wärmeträgerleitung 56 und damit am Ende des betreffenden Wärmetauscherrohrs 57, ein Anschlußpunkt 64 gezeigt, der sich nach einem 90° Bogen, der parallel zu einem sechsten Basiselement 66 angeordnet ist, befindet und dafür vorgesehen ist, an einem Kühlmittelkreislauf angeschlossen zu werden. Das sechste Halteelement 54 hat an der betreffenden Stelle, an welcher der soeben beschriebene 90° Boden angeordnet ist eine nützlich gestaltete Ausnehmung.

Demgemäß kann die Länge der Wärmeleitprofile 14, 15, 16 so gewählt werden, daß die bis zum Rand einer Deckenverkleidungsplatte reichen. Die Magnetstreifen sind entsprechend länger und besser mit der Deckenverkleidungsplatte verbunden.

Um die Verminderung beim der Durchbiegung einer Deckenverkleidungsplatte, dem sogenannten Plattendurchhang, zu zeigen, soll folgendes Beispiel dienen. Bei einer Abmessung von 950mm Breite sowie 1800mm Länge einer Deckenverkleidungsplatte mit einer Standard-Dicke von 0,7mm war bisher ein Plattendurchhang von ca.8mm typisch. Ein Plattendurchhang in dieser Größenordnung wird jedoch vom Auge eines Betrachters wahr genommen und als störend betrachtet. Ein Plattendurchhang von 3mm wird üblicherweise vom Betrachter akzeptiert. Mit den erfindungsgemäßen Wärmeleitprofilen, die eine Länge entsprechend der den Deckenverkleidungsplatten aufweisen, ist für diesen Fall ein Plattendurchhang von nur ca. 2mm erzielbar.

## Patentansprüche

1. Wärmeleitprofil (10, 12, 14, 15, 16), insbesondere vorgesehen zum Einbau in Wärmetauscherdecken, mit einem bandartigen Basiselement (20), mit in dessen Längsrichtung symmetrisch verlaufenden, auf der Oberseite angeformten, nach oben weisenden Verbindungsstegen (24, 26,38, 40) und mit einer mittig dazwischen am Basiselement (20) einstückig angeformten Einrichtung (22) zur formschlüssigen Aufnahme eines Wärmetauscherrohrs (57), wobei an der hiervon abgewandten Unterseite des Basiselements (20) wenigstens eine Ausnehmung (27, 29) eingeformt ist, die als Kammer (28, 30) zur Aufnahme von Magneten vorgesehen ist, **dadurch gekennzeichnet, daß** an das Basiselement (20) beiderseits der nach oben weisenden Verbindungsstege (24, 26,38, 40) entlang der Längskanten des Basiselements (20) Seitenstege (32, 34) angeformt sind, deren Breite jeweils wenigstens 10%, vorzugsweise 20%, der Breite des Basiselements (20) beträgt, und daß die wenigstens eine Ausnehmung (27, 29) zwischen den Seitenstegen (32, 34) angeordnet ist.

2. Wärmeleitprofil (10, 12, 14, 15, 16) gemäß Anspruch 1, **dadurch gekennzeichnet, daß** das Wärmetauscherrohr (57) in die Einrichtung (22) einrastbar ist.

3. Wärmeleitprofil (10, 12, 14, 15, 16) gemäß Anspruch 1 oder 2, **dadurch gekennzeichnet, daß** zwischen der Einrichtung (22) und dem Basiselement (20) ein Anschlußbereich vorgesehen ist, dessen Breite wenigstens fünfzig Prozent der lichten Weite der Einrichtung (22) beträgt.

4. Wärmeleitprofil (10, 12, 14, 15, 16) gemäß einem der Ansprüche 1 oder 2, **dadurch gekennzeichnet, daß** der Anschlußbereich wärmetechnisch durch Paßelemente verbreitert ist, die im keilförmigen Bereich zwischen Einrichtung (22) sowie Basiselement (20) angeordnet und aus einem Material, das wenigstens eine so gute Wärmeleitfähigkeit wie das Material des Basiselements (20) aufweist, sind.

5. Wärmeleitprofil (10, 12, 14, 15, 16) gemäß einem der vorgenannten Ansprüche, **dadurch gekennzeichnet, daß** bei dem Verbindungssteg (24, 26, 38, 40) im Anschlußbereich mit dem Basiselement (20) der Querschnitt verringert ist.

6. Wärmeleitprofil (10, 12, 14, 15, 16) gemäß einem der vorgenannten Ansprüche, **dadurch gekennzeichnet, daß** an der zu der Einrichtung (22) weisenden Seite der Verbindungsstege (38, 40) je wenigstens ein Versteifungselement (42, 44), vorzugsweise stegartig, angeordnet ist.

7. Wärmeleitprofil (10, 12, 14, 15, 16) gemäß Anspruch 6, **dadurch gekennzeichnet, daß** das Versteifungselement (42, 44) am freien Ende des Verbindungsstegs (38, 40) angeordnet ist.

8. Wärmeleitprofil (10, 12, 14, 15, 16) gemäß Anspruch 6 oder 7, **dadurch gekennzeichnet, daß** die Versteifungselemente (42, 44) rechtwinklig zu den ihnen zugeordneten Verbindungsstegen (38, 40) angeordnet sind.

9. Wärmeleitprofil (10, 12, 14, 15, 16) gemäß einem der Ansprüche 6 bis 8, **dadurch gekennzeichnet, daß** die Breite der Versteifungselemente (42, 44) wenigstens ein Viertel der Breite der Verbindungsstege (38, 40) beträgt.

10. Wärmeleitprofil (10, 12, 14, 15, 16) gemäß einem der vorgenannten Ansprüche, **dadurch gekennzeichnet, daß** in wenigstens einem der Verbindungsstege (42, 44) wenigstens eine erste Ausnehmung vorgesehen ist, durch die wenigstens eine Verbindungsleitung (59) zum Wärmetauscherrohr in der Einrichtung (22) von einer zu dem betreffenden Verbindungssteg (24, 26, 38, 40) weisenden Längsseite des Wärmeleitprofils (10, 12, 14, 15, 16) sowie parallel zur Ebene des Basiselements (20) zuführbar ist.

11. Wärmeleitprofil (10, 12, 14, 15, 16) gemäß einem der vorgenannten Ansprüche, **dadurch gekennzeichnet, daß** in der Einrichtung (22) wenigstens eine zweite Ausnehmung vorhanden ist, durch welche die Verbindungsleitung (59) dem Wärmetauscherrohr (57) in der Einrichtung (22) zuführbar ist.

12. Wärmetauscherdecke mit einer an einer Raumdecke abgehängten Befestigungskonstruktion für Deckenverkleidungsplatten, die eine Tragekonstruktion für Wärmeleitprofile (10, 12, 14, 15, 16) aufweisen, wobei das Wärmeleitprofil (10, 12, 14, 15, 16) ein bandartiges Basiselement (20), mit an dessen Längsrichtung symmetrisch verlaufenden, auf der Oberseite angeformten, nach oben weisenden Verbindungsstegen (24, 26,38, 40) zur Verbindung mit der Tragekonstruktion und einer mittig dazwischen am Basiselement (20) angeformten Einrichtung (22) zur formschlüssigen Aufnahme eines Wärmetauscherrohrs (57) aufweist, wobei die Wärmeleitprofile (10, 12, 14, 15, 16) mittels Magnetkraft mit den Deckenverkleidungsplatten verbunden sind, und wobei auf einer Deckenverkleidungsplatte wenigstens zwei Wärmeleitprofile (14, 15, 16) in Längsrichtung nebeneinander angeordnet und die Wärmetauscherrohre (57) zweier benachbarter Wärmeleitprofile (14, 15, 16) an ihren Enden mit einer Verbindungsleitung (59) verbunden sind, **dadurch gekennzeichnet, daß** die Verbindungsleitung (59) auf den einander zugewandten Längsseiten aus dem jeweiligen Bereich der Wärmeleitprofile (14, 15, 16) herausgeführt ist.

13. Wärmetauscherdecke nach Anspruch 12, **dadurch gekennzeichnet, daß** als maximale Länge des Wärmeleitprofils (10, 12, 14, 15, 16) nahezu die Länge einer Deckenverkleidungsplatte wählbar ist.

14. Wärmetauscherdecke nach Anspruch 12 oder 13, **dadurch gekennzeichnet, daß** sich die zueinander weisenden Längsseiten der Basiselemente (20) beziehungsweise der Seitenelemente (32,34) zweier benachbarter Wärmeleitprofile (14, 15, 16) berühren.

15. Wärmetauscherdecke nach einem der Ansprüche 12 bis 14, **dadurch gekennzeichnet, daß** die Verbindungsleitung (58) ein flexibler Schlauch ist.

16. Wärmetauscherdecke nach einem der Ansprüche 12 bis 15, **dadurch gekennzeichnet, daß** Bogenstücke am Ende der Verbindungsleitung (59) mit einem möglichst kleinen Krümmungsradius, vorzugsweise 1,5D, gebogen sind.
